# EUROPEAN PATENT SPECIFICATION

(11) **EP 1 349 747 B1**
(45) Date of publication and mention of the grant of the patent: **20.08.2008**
(21) Application number: 01272419.1
(22) Date of filing: 19.12.2001
(51) Int. Cl.: B60P 1/64, B65D 88/52

(54) **LOAD CARRYING DEVICE**
LASTTRANSPORTVORRICHTUNG
DISPOSITIF PORTEUR DE CHARGE

(30) Priority: 22.12.2000 SE 0004805
(43) Date of publication of application: 08.10.2003
(73) Proprietor: Aerotechtelub AB, S-831 25 Östersund (SE)
(72) Inventor: NÄSMAN, Kent, S-881 92 Sollefteå (SE); LÖGDBERG, Hans, S-832 55 Frösön (SE); FAHLANDER, Stefan, S-831 47 Östersund (SE)
(74) Representative: Ellner, Lars O.
(86) International application number: PCT/SE2001/002845
(87) International publication number: WO 2002/051666

(56) References cited:
- EP-A1- 0 069 043
- WO-A1-93/18934

## Description

### Field of the Invention

The present invention relates to a load carrying device according to the preamble of claim 1, comprising a load transference rack and a top. The invention further relates to a top for a load transference rack according to the preamble of claim 9. A device of the kind with a top of the kind is known from WO93/18934.

### Background Art

To transport goods by road, the goods are in most cases stowed on a load transference rack which is open or covered only by tarpaulins. The load transference rack is then anchored to a lorry or trailer adapted for this purpose. There are a number of regulations governing transport of goods by road: for example, the maximum axle load is limited to 9 tons on main roads, also called BK1 roads.

When transporting goods by sea, it is often desirable to protect the goods better by stowing them into a container. Other rules apply to transport of goods by sea than to transport by road and there is a special standard for containers adapted for transport by sea, also called ocean containers; for example, an ocean container must be 8 ft. wide, 8 ft. high and 10, 20, 30 or 40 ft. long. A 20 ft. container cannot weigh more than 24 tons when fully loaded and must be able to carry the weight of 8 other containers stacked on top of it.

Ocean containers are usually also used for transporting goods by rail.

Transfer of such containers from a ship for further transport by road is also possible. For this purpose, there are lorries that are specially adapted to carry an ocean container. One problem associated therewith is that an ocean container considerably reduces the load capacity of a lorry when placed thereon. In some cases, even the resulting axle load will be impermissibly high. An empty ocean container weighs in itself as much as 2-3 tons. Therefore, some of the goods has to be unloaded before the container can be transported by the lorry. Besides being a time-consuming process, this also implies that the unloaded goods has to be taken care of, for example stored or loaded onto another lorry. Finally, in terms of the environment it is also a drawback that the weight of the ocean container constitutes such a large share of the total weight of the lorry, since this is a weight that cannot be used for the actual goods.

The weight problem is even greater in air transport, since, in most cases, it is the weight of the cargo rather than its volume that determines the load capacity of an aircraft.

On the other hand, it is also a problem that a load transference rack intended for road transport, such as disclosed in, for example, WO93/18934, does not comply with the ocean container standard, neither in terms of measurements nor stackability. Consequently, in most cases goods transported to ports by lorries must be transferred to ocean containers for further transport by sea.

Nor is a load transference rack adapted for transport by rail, since each goods wagon has the capacity to carry a significantly larger load than that of a load transference rack. Accordingly, the goods are usually transferred to wagons or containers intended for transport by rail.

### Summary of the Invention

In view hereof, it is an object of the present invention to provide a load carrying device which is of the type mentioned by way of introduction and which is suitable for all four modes of transport: road, sea, rail and air.

According to the invention, this object is achieved by means of a load carrying device having the features as defined in claim 1.

It is a further object of the present invention to provide a top which can interact with a load transference rack to obtain such a load carrying device.

According to the invention, this object is achieved by means of a top having the features as defined in claim 10.

Thus, according to a first aspect the invention concerns a load carrying device comprising a load transference rack and a top. According to a second aspect, the invention concerns the top as a separate unit. The top is designed to interact with a load transference rack to obtain a load carrying device according to the invention.

The load carrying device of the invention comprises a load transference rack having a first width, a top having a second width, which is larger than the first width, and anchoring means for releasably mounting the load carrying device on a means of transportation or on another load carrying device, said load transference rack being provided with first connecting means, said top being provided with corresponding second connecting means, and said first and second connecting means being adapted to be releasably connected to each other. The top comprises a three-dimensional frame, the load carrying device is stackable when the load transference rack has been connected to the top, and beams are arranged in the three-dimensional frame in such a manner that they form the sides of a right parallelepiped*.*

The load transference rack of the invention has the same basic design as common load transference racks. However, it has been modified by the above stated features. Thus, the difference between the load transference rack of the invention and commonly used load transference racks is, inter alia, that it is connectable to a top which is wider and which comprises a three-dimensional frame. In addition, the load carrying device is stackable. In other respects, the top may be designed in various ways to obtain a load carrying device that is suitable for the desired mode of transport.

According to the invention, the top is releasably connected to the load transference rack. The load carrying device of the invention thus constitutes a flexible unit which can be adapted to different modes of transport. Furthermore, the load transference rack of the invention may thus be provided with different tops depending on which type of load carrying device is desirable; alternatively, the load transference rack may be used without a top. The flexibility of this load carrying device also allows it to be easily adapted when changing from one mode of transport to another. For example, the load transference rack may, together with the top, form a container, such as a standard ocean container, for transporting goods by rail or by sea. Thus, if the goods are to be transferred onto a lorry or an aircraft at a later stage, the top may then be lifted off or removed from the load transference rack, so that the load transference rack forms essentially a traditional load transference rack. It has been found that for many types of goods the weight reduction thus obtained is enough to stay below the limit values for permissible axle load of the lorry or permissible loaded weight of an aircraft. In other cases, some goods may indeed have to be unloaded, but even in these cases the handling is considerably facilitated compared with prior-art technique, since the unloading is made considerably easier and quicker by the fact that the top has been removed and the goods uncovered.

According to the invention, the load carrying device also comprises anchoring means for interconnection with a means of transportation or another load carrying device. The anchoring means may be arranged either on the load transference rack or on the top. Preferably, the load carrying device comprises a plurality of anchoring means, which are preferably arranged in the downwardly directed corner areas of the load carrying device. If the load carrying device is of a stackable type, one load carrying device may be placed on top of another, similar load carrying device and attached thereto by means of these anchoring means. This is particularly preferred in connection with transport by sea. Naturally, the load carrying device may also be placed on top of a load carrying device of another type and attached thereto. The load carrying device may also be attached with the aid of the anchoring means to a means of transportation, such as the deck of a ship or, possibly using the anchoring means as a supplement to conventional means of attachment, a lorry. The anchoring means may optionally be designed in any prior-art manner and the load carrying device may possibly be provided with supplementary parts which interact with the anchoring means to obtain the releasable connection. An anchoring means may, for example, include a clamp bolt, a bolted joint, a snap lock or a container lock, the latter being particularly preferred.

According to the invention, the load transference rack and the top are provided with supplementary first and second connecting means. These connecting means are arranged in such manner that they interact to achieve the releasable connection between the load transference rack and the top. In this context, the first and second connecting means are arranged so as to engage each other when the top is placed on top of the load transference rack. They either interlock automatically or can be locked by acting thereon. For this purpose, the first and second connecting means may comprise a clamp bolt, a bolted joint, a snap lock or a container lock, the latter being particularly preferred.

According to the first aspect of the invention, the top is wider than the load transference rack and comprises a three-dimensional frame. As stated above, the rack may in other respects be designed in many different ways. In a preferred embodiment of the invention, beams are arranged on the top in such manner that they form the sides of a right parallelepiped. A stable, basic structure is thereby obtained, which offers a large, interior load space. Such a frame may, for example, enclose a fuel tank or a platform, thus advantageously allowing stacking of load carrying devices that would not normally be stackable.

Preferably, there are provided' a plurality of first and second connecting means. Furthermore, it is preferred for the connecting means to be arranged in pairs along the longitudinal extension of the load carrying device, for instance one adjacent to each corner of the load transference rack and the top, respectively.

In a preferred embodiment of the invention, the first connecting means are adapted to project from the load transference rack. In addition, the first connecting means preferably project enough to allow interaction with the second connecting means in the case where the latter are arranged in the corners of the top facing the load transference rack when the top has been connected to the load transference rack. It is also conceivable, however, to arrange the first connecting means adjacent to the load transference rack and the second connecting means on the top extending inwards.

According to the invention, it is also particularly preferred for the anchoring means to be made in one piece with the first connecting means or arranged close thereto.

To protect the cargo in a more satisfactory manner, the frame may be covered by a tarpaulin or the like.

In a preferred embodiment of the invention, the lateral faces and the upper face of the frame are covered by panels. The panels may be attached, for example, by means of welded joints. The load carrying device will thus form a covered container when such a top has been connected to the load transference rack of the invention. In this connection, it is particularly preferred for the load carrying device to form a standard ocean container. This would allow goods transported by road to be transferred to an ocean container that complies with all the requirements simply by attaching the top according to the preferred embodiment of the invention to the load transference rack of the invention.

According to a further, preferred embodiment of the invention, the actual frame of the top and the covering panels, if any, are demountable. In this embodiment, the panels may, for example, be attached by means of bolted or riveted joints. A top having demountable covering panels will be particularly easy to store when it is not used. Optionally, it may also be transported on the lorry for future use in another means of transportation.

### Brief Description of the Drawings

Preferred examplary embodiments of the invention will be explained below with reference to the accompanying, schematic drawings, in which
Fig. 1 is a perspective view of the load carrying device according to the invention in which the top has been somewhat separated from the load transference rack;
Fig. 2 illustrates an alternative, demountable embodiment of the top according to the invention; and
Fig. 3 illustrates the alternative embodiment of the top in Fig. 2 provided with covering panels.

### Description of Preferred Embodiments

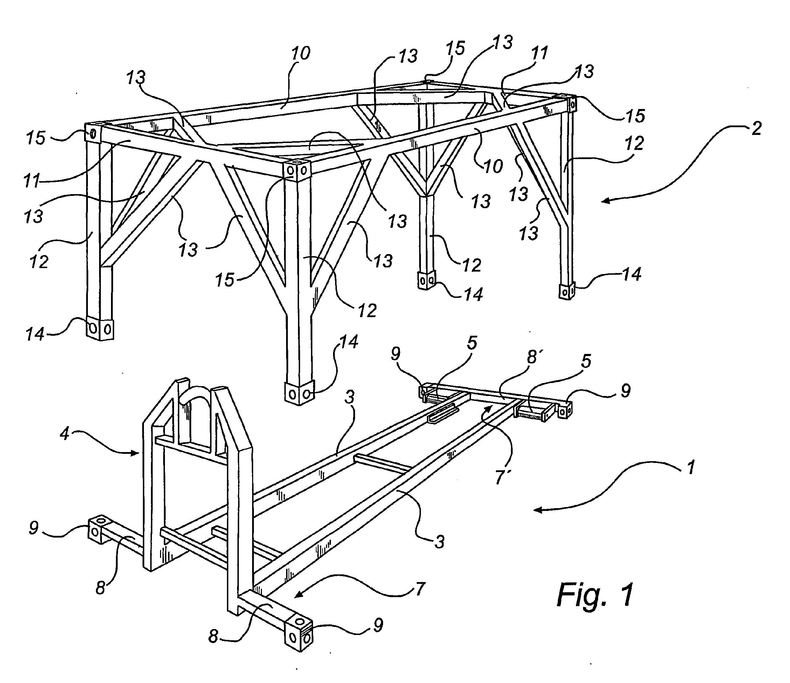

Fig. 1 shows a first embodiment of the load carrying device of the invention. The load carrying device comprises a load transference rack 1 and a top 2.

Like prior-art load transference racks, the load transference rack 1 of the invention has a frame which comprises two longitudinal beams 3. At its front end, it also comprises a hitching device 4 which like an arch interconnects the beams 3. At its other end, the load transference rack 1 has two lowerable rollers 5. A lorry adapted to receive load transference racks comprises, for example, a jib crane which can engage with the hitching device of the load transference rack. The load transference rack 1 can then be pulled onto the lorry by means of the rollers on the load transference rack 1. Like prior-art load transference racks, the load transference rack 1 also comprises a means of attachment (not shown) to allow attachment thereof to the lorry.

Fig. 1 illustrates a neutral embodiment of the load transference rack 1 and its associated frame. The frame may, of course, be modified in various ways to fit a certain type of goods. The load transference rack may, for instance, be provided with a floor rack for palletised goods, a platform for goods in bulk or a tank for liquid goods, such as fuel.

At its front end, the load transference rack 1 further comprises a first connecting means 7. The first connecting means 7 comprises an extension beam 8, which projects past the front end portion of one of the longitudinal beams 3 and which is perpendicular thereto. A connecting box 9 is mounted at the outer end of the extension beam 8. A similar first connecting means is arranged in the same manner at the front end of the other longitudinal beam 3.

At the rear end of the load transference rack 1, i.e. the end facing away from the hitching device 4, a different type of connecting means 7' is provided. At the rear ends of the beams 3, an extension beam 8' in one piece is arranged perpendicularly to the beams 3. The extension beam 8' projects beyond the beams the same distance on both sides. A connecting box 9 is mounted on either end of the extension beam 8'. A first connecting means 7' of the second type thus comprises half of the extension beam 8' and a connecting box 9 mounted at the outer end of the extension beam 8'.

The distance between the longitudinal beams 3 corresponds to the standard width of a conventional load transference rack, i.e. 1 metre. The distance between the two front connecting boxes 9 and between the two rear connecting boxes 9 corresponds to the standard width of an ocean container, i.e. currently 8 ft. Likewise, the distance between a front connecting box 9 and a rear connecting box 9 located on the same side corresponds to a standard length of an ocean container, in this case 20 ft.

Each connecting box 9 comprises both a means for connecting the load transference rack 1 to the top 2 and an anchoring means for interconnecting the load transference rack 1 and another load carrying device. In the preferred embodiment shown, both the means for interconnection with the top and the anchoring means consist of container locks.

The top 2 comprises a three-dimensional frame of longitudinal beams 10, transverse beams 11, and vertical beams 12, which form the sides of a right parallelepiped. Stiffening beams 13 are diagonally arranged between said beams 10, 11, 12. Thus, the top is sufficiently rigid to be stackable.

In the four lower corners of the right parallelepiped, other connecting means 14 are provided, which, in the preferred embodiment shown, consist of container locks. The horizontal distance between two container locks across the longitudinal beams 10 corresponds to the tandard width of an ocean container, i.e. currently 8 ft. Likewise, the horizontal distance between a front container lock and a rear container lock located on the same side corresponds to a standard length of an ocean container, in this case 20 ft.

To connect the top 2 to the load transference rack, the top is lifted, for example, by a crane. It is then positioned above the load transference rack so that the second connecting means 14 (container locks) of the top are located above the container locks provided in the connecting boxes 9 of the load transference rack. Once the top 2 is in the right position, it is lowered onto the load transference rack 1 and the container locks are interlocked.

To remove the top 2 from the load transference rack, the reverse procedure is carried out, i.e. the container locks are unlocked and the top 2 is lifted off, for example, by a crane.

When the load transference rack 1 is connected to the top, it forms a load carrying device that can be stacked on another load carrying device, for example a similar load carrying device or a standard ocean container. For this purpose, container locks 15 are provided also in the four upper corners of the top. The locks interact with the container locks of an ocean container in the case where such a container is arranged on top of the load carrying device. When the load carrying device of the invention, in turn, is arranged on top of a similar load carrying device, the container locks 15 of the top of one load carrying device interact with the anchoring means, likewise in the form of container locks, of the load transference rack 1.

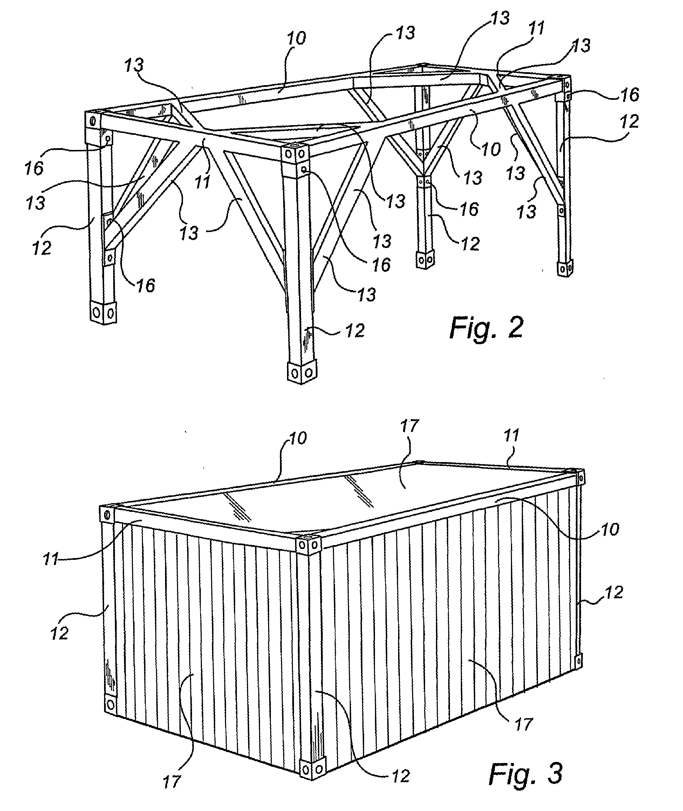

Fig. 2 illustrates an alternative, currently preferred embodiment of the top 2 according to the invention, in which the frame of the top itself is demountable. The beams 10, 11, 12 and 13 are attached to one another by means of bolts 16. This allows the top to be dismantled to obtain a pack of elongate beams, which does not require much storage space and which can even be transported on a lorry for future assembly and use, for example, in another means of transportation.

This currently preferred embodiment of the top 2 further comprises panels 17 which cover the lateral faces and the upper face of the right parallelepiped formed by the frame, the upper face being the side which during use faces away from the load transference rack, see Fig. 3. The panels are attached to the beams 10, 11 and 12 of the frame by means of bolts so that also the panels can be mounted and dismounted.

Accordingly, when such a preferred top 2 provided with panels and having the standard measurements of an ocean container is connected to a load transference rack with the corresponding measurements, a standard ocean container is advantageously obtained, which, in addition, complies with all other standard specifications for ocean containers, for example as regards stackability and strength.

Finally, it should be noted that the invention is not limited to the embodiments described and can be modified within the scope of the appended claims.

## Claims

1. A load carrying device comprising a load transference rack (1) having a first width, a top (2) having a second width, which is larger than the first width, and anchoring means for releasably mounting the load carrying device on a means of transportation or on another load carrying device, said load transference rack (1) being provided with first connecting means, said top (2) being provided with corresponding second connecting means (14), and said first and second (14) connecting means being adapted to be releasably connected to each other, whereby the top (2) comprises a three-dimensional frame,
**characterized in that** the load carrying device is stackable when the load transference rack (1) has been connected to the top (2), and that beams (10, 11, 12) are arranged in the three-dimensional frame of the top (2) in such manner that they form the sides of a right parallelepiped.

2. A load carrying device according to claim 1, wherein the first connecting means project from the load transference rack (1).

3. A load carrying device according to claim 2, wherein the load transference rack (1) comprises two long sides and two short sides, and wherein each first connecting means comprises at least part of an extension beam (8, 8') and a connecting box (9), said at least part of the extension beam (8, 8') extending parallel to one of the short sides and presenting an end portion which projects beyond one of the long sides and on which the connecting box (9) is arranged.

4. A load carrying device according to claim 3, wherein each anchoring means is arranged in one of the connecting boxes (9).

5. A load carrying device according to claim 3 or 4, wherein each connecting box (9) comprises at least one container lock.

6. A load carrying device according to any of claims 1-5, wherein the frame of the top (2) is in itself demountable.

7. A load carrying device according to any of the preceding claims wherein the top (2) comprises panels (17) covering the frame on all sides except the side facing the load transference rack (1) when the top (2) has been connected to the load transference rack (1).

8. A load carrying device according to claim 7, which forms a standard ocean container when the load transference rack (1) has been connected to the top (2).

9. A top (2) which has a second width and is intended for a load transference rack (1) having a first width that is smaller than the second width, said top (2) being adapted to be releasably connected to the load transference rack (1), whereby the top (2) comprises a three-dimensional frame **characterized in that** beams (10, 11, 12) are arranged in the three-dimensional frame of the top (2) in such manner that they form the sides of a right parallelepiped.

10. A top (2) according to claim 9, wherein the frame is dismountable.

11. A top (2) according to claim 9 or 10, comprising panels (17) covering the frame on all sides except on the side facing the load transference rack (1) when the top (2) has been connected to the load transference rack (1).

## Patentansprüche

1. Lasttransportvorrichtung, umfassend ein Last-Umladegestell (1), das eine erste Breite aufweist, ein Oberteil (2), das eine zweite Breite aufweist, die größer ist als die erste Breite, und Verankerungsvorrichtungen zum lösbaren Anbringen der Lasttransportvorrichtung an einem Transportmittel oder an einer anderen Lasttransportvorrichtung, wobei das Last-Umladegestell (1) mit ersten Verbindungsvorrichtungen versehen ist, wobei das Oberteil (2) mit entsprechenden zweiten Verbindungsvorrichtungen (14) versehen ist, und wobei die ersten Verbindungsvorrichtungen und die zweiten Verbindungsvorrichtungen (14) angepasst sind, um lösbar miteinander verbunden zu werden, wodurch das Oberteil (2) einen dreidimensionalen Rahmen umfasst,
und **dadurch gekennzeichnet, dass** die Lasttransportvorrichtung stapelbar ist, wenn das Last-Umladegestell (1) mit dem Oberteil (2) verbunden worden ist, und dass Träger (10, 11,12) in dem dreidimensionalen Rahmen des Oberteiles (2) dergestalt angeordnet sind, dass sie die Seiten eines rechtwinkligen Parallelepipeds bilden.

2. Lasttransportvorrichtung nach Anspruch 1, wobei die ersten Verbindungsvorrichtungen von dem Last-Umladegestell (1) hervorstehen.

3. Lasttransportvorrichtung nach Anspruch 2, wobei das Last-Umladegestell (1) zwei lange Seiten und zwei kurze Seiten umfasst und wobei eine jede erste Verbindungsvorrichtung wenigstens einen Teil eines Verlängerungsträgers (8, 8') und einen Verbindungskasten (9) umfasst, wobei sich der wenigstens Teil des Verlängerungsträgers (8,8') parallel zu einer der kurzen Seiten erstreckt und einen Endabschnitt darstellt, der über eine der langen Seiten hervorsteht und an dem der Verbindungskasten (9) angeordnet ist.

4. Lasttransportvorrichtung nach Anspruch 3, wobei eine jede Verankerungsvorrichtung in einem der Verbindungskästen (9) angeordnet ist.

5. Lasttransportvorrichtung nach Anspruch 3 oder Anspruch 4, wobei ein jeder Verbindungskasten (9) wenigstens eine Containerverriegelung umfasst.

6. Lasttransportvorrichtung nach einem der Ansprüche 1 bis 5, wobei der Rahmen des Oberteiles (2) selbst abnehmbar ist.

7. Lasttransportvorrichtung nach einem der vorhergehenden Ansprüche, wobei das Oberteil (2) Verkleidungen (17) umfasst, die den Rahmen auf allen Seiten mit Ausnahme der Seite, die dem Last-Umladegestell (1) zugewandt ist, bedecken, wenn das Oberteil (2) mit dem Last-Umladegestell (1) verbunden worden ist.

8. Lasttransportvorrichtung nach Anspruch 7, das einen Standardseecontainer bildet, wenn das Last-Umladegestell (1) mit dem Oberteil (2) verbunden worden ist.

9. Oberteil (2), das eine zweite Breite aufweist und für ein Last-Umladegestell (1), das eine erste Breite aufweist, die kleiner ist als die zweite Breite, vorgesehen ist, wobei das Oberteil (2) angepasst ist, um lösbar mit dem Last-Umladegestell (1) verbunden zu sein, wodurch das Oberteil (2) einen dreidimensionalen Rahmen umfasst, **dadurch gekennzeichnet, dass** Träger (10, 11, 12) in dem dreidimensionalen Rahmen des Oberteiles (2) dergestalt angeordnet sind, dass sie die Seiten eines rechtwinkligen Parallelepipeds bilden.

10. Oberteil (2) nach Anspruch 9, wobei der Rahmen abnehmbar ist.

11. Oberteil (2) nach Anspruch 9 oder Anspruch 10, das Verkleidungen (17) aufweist, die den Rahmen auf allen Seiten mit Ausnahme der Seite, die dem Last-Umladegestell (1) zugewandt ist, abdecken, wenn das Oberteil (2) mit dem Last-Umladegestell (1) verbunden worden ist.

## Revendications

1. Dispositif porteur de charge comprenant un plateau de transfert de charge (1) ayant une première largeur, une partie supérieure (2) ayant une seconde largeur, qui est plus grande que la première largeur, et des moyens d'ancrage pour monter de manière amovible le dispositif porteur de charge sur des moyens de transport ou un autre dispositif porteur de charge, ledit plateau de transfert de charge (1) étant doté de premiers moyens de raccordement, ladite partie supérieure (2) étant dotée de seconds moyens de raccordement (14) correspondants, et lesdits premiers et seconds (14) moyens de raccordement étant adaptés pour être raccordés de manière amovible entre eux, moyennant quoi la partie supérieure (2) comprend un châssis tridimensionnel,
**caractérisé en ce que** le dispositif porteur de charge peut être empilé lorsque le plateau de transfert de charge (1) a été raccordé à la partie supérieure (2), et **en ce que** des poutres (10, 11, 12) sont agencées dans le châssis tridimensionnel de la partie supérieure (2) de sorte qu'elles forment les côtés d'un parallélépipède droit.

2. Dispositif porteur de charge selon la revendication 1, dans lequel les premiers moyens de raccordement font saillie du plateau de transfert de charge (1).

3. Dispositif porteur de charge selon la revendication 2, dans lequel le plateau de transfert de charge (2) comprend deux côtés longs et deux côtés courts, et dans lequel chacun des premiers moyens de raccordement comprend au moins une partie d'une poutre d'extension (8, 8') et une boîte de raccordement (9), ladite au moins une partie de poutre d'extension (8, 8') s'étendant parallèlement à l'un des côtés courts et présentant une partie d'extrémité qui fait saillie au-delà de l'un des côtés longs et sur laquelle la boîte de raccordement (9) est agencée.

4. Dispositif porteur de charge selon la revendication 3, dans lequel chaque moyen d'ancrage est agencé sur l'une des boîtes de raccordement (9).

5. Dispositif porteur de charge selon la revendication 3 ou 4, dans lequel chaque boîte de raccordement (9) comprend au moins un verrouillage de conteneur.

6. Dispositif porteur de charge selon l'une quelconque des revendications 1 à 5, dans lequel le châssis de la partie supérieure (2) est démontable en soi.

7. Dispositif porteur de charge selon l'une quelconque des revendications précédentes, dans lequel la partie supérieure (2) comprend des panneaux (17) recouvrant le châssis sur tous les côtés, excepté le côté faisant face au plateau de transfert de charge (1) lorsque la partie supérieure (2) a été raccordée au plateau de transfert de charge (1).

8. Dispositif porteur de charge selon la revendication 7, qui forme un conteneur maritime standard lorsque le plateau de transfert de charge (1) a été raccordé à la partie supérieure (2).

9. Partie supérieure (2) qui a une seconde largeur et est prévue pour un plateau de transfert de charge (1) ayant une première largeur qui est inférieure à la seconde largeur, ladite partie supérieure (2) étant adaptée pour être raccordée de manière amovible au plateau de transfert de charge (1), moyennant quoi la partie supérieure (2) comprend un châssis tridimensionnel, **caractérisée en ce que** des poutres (10, 11, 12) sont agencées dans le châssis tridimensionnel de la partie supérieure (2) de sorte qu'elles forment les côtés d'un parallélépipède droit.

10. Partie supérieure (2) selon la revendication 9, dans laquelle le châssis est démontable.

11. Partie supérieure (2) selon la revendication 9 ou 10, comprenant des panneaux (17) recouvrant le châssis de tous les côtés excepté le côté faisant face au plateau de transfert de charge (1) lorsque la partie supérieure (2) a été raccordée au plateau de transfert de charge (1).
